# EUROPEAN PATENT APPLICATION

(11) **EP 3 901 417 A1**
(43) Date of publication of application: **27.10.2021**
(21) Application number: 21179314.6
(22) Date of filing: 31.05.2017
(51) Int. Cl.: F01D 5/28, F01K 21/04, F01K 25/06, F01K 25/10, F02C 1/10

(54) **AN EXPANDER, AN ORGANIC RANKINE CYCLE SYSTEM COMPRISING SUCH AN EXPANDER AND A METHOD OF PRODUCING AN ORGANIC RANKINE CYCLE SYSTEM COMPRISING SUCH AN EXPANDER**

(30) Priority: 01.06.2016 SE 1650765
(62) Divisional of application: 17728491.6
(71) Applicant: Againity AB, 602 41 Norrköping (SE)
(72) Inventor: Frykerås, David, 605 97 Norrköping (SE); Wren, Joakim, 591 97 Motala (SE)
(74) Representative: AWA Sweden AB

(57) **Abstract**

Expander (4) for use at a maximum internal operating temperature of less than or about 180°C, comprising a stationary shroud (25), a plurality of blades (10) or shrouded blades (10') arranged circumferentially about a rotor (30) and extending substantially radially from the rotor towards a first surface (31) of the stationary shroud (30). In a pre-operating condition a substantially radial gap (r) is formed between a surface of a radially outermost tip of the blades (10) or the shrouded blades (10') and the first surface (31) of the stationary shroud (25). The material of the blades (10), or shrouded blades (10'), and alternatively also the stationary shroud (25) comprises at least 80 at.% aluminum, and the blades (10) or shrouded blades (10') and at least the first surface (31) of a stationary shroud (30) if of at least 80 at.% aluminum presents a surface layer (20) having a thickness (d) of from 1 to 1000 µm and an average Vickers hardness of 400 HV or more, such that the gap (r) is defined between two surfaces wherein at least one of the surfaces presents said surface layer

## Description

### Technical Field

The present disclosure relates to an expander for use at a maximum internal operating temperature of less than or about 180°C, the use of such an expander, an Organic Rankine Cycle system comprising such an expander, and to a method of producing an Organic Rankine Cycle system comprising such an expander.

### Technical Background

A thermal power plant transforms energy from a heat source into work. The Rankine cycle is the thermodynamic cycle most often realized in thermal power plants. This cycle involves a working fluid that is heated and at least partly vaporized at a relatively high pressure in a boiler, and subsequently expanded through a turbine or similar device in which internal energy and/or the flow energy in the working fluid is converted to work, and thereafter readily converted to electricity by a generator. After the turbine, the working fluid is at a lower temperature and pressure than before the turbine, and is cooled further, either directly in a condenser or by first passing through a recuperator in which some of the energy in the working fluid is reused in the cycle.

In an Organic Rankine Cycle (ORC) the working fluid is an organic fluid, often a relatively high molecular mass fluid with a liquid-vapor phase change, or boiling point, occurring at a lower temperature than the water-steam phase change. Examples of such fluids are pentane and R245FA. In many ORC systems this results in a slower rotation of the steam turbine, lower pressure in the steam turbine and fewer turbine stages than in standard Rankine Cycle steam turbines. Another advantage with most of the organic fluids that can be used in an ORC is that they are considered as "dry", meaning that there is no risk of condensation in the turbine as long as the entropy increases or is constant through the turbine, which is almost always the case in practice.

The ORC allows heat recovery from low-temperature heat sources such as industrial waste heat, geothermal heat, biomass combustion exhaust gases, and solar-heat systems. The low-temperature heat is converted into useful work which can be converted for example into electricity. The efficiency of an ORC is normally lower than a standard Rankine Cycle as a result of the lower temperature difference between heat supply in the boiler and heat rejection in the condenser. The benefit is that the ORC work efficiently at lower temperatures than the water steam Rankine Cycle due to lower boiling point of the ORC, and that the ORC is somewhat easier to realize in a cost-effective way for small thermal power plants (electricity output < 1 MW).

Another thermodynamic cycle which allows heat recovery from low-temperature heat sources is the Kalina Cycle, which utilizes an expanding gaseous working fluid including at least two components having different boiling points to transform its energy into a useable form. The Kalina Cycle often utilizes an ammonia-water mixture as the working fluid.

Thermodynamic cycles, such as ORCs, Kalina Cycles and the like, which transform energy from a low-temperature heat source into a useable form are of increasing interest for electricity production in areas in which large quantities of waste heat is generated.

Thermodynamic cycle systems such as ORC systems, Kalina Cycle systems or similar cycle systems used today are, however, quite expensive with regard to production, material and operating costs, why the time from purchase to pay off is long.

### Summary of the Invention

In view of the above, an object of this disclosure is to present an expander which is less expensive with regard to production, material and operating costs than expanders used in known thermodynamic cycle systems for converting heat from low-temperature heat sources into work. It is also an object to provide a use of such an expander, an Organic Rankine Cycle System comprising such an expander and a method of producing an Organic Cycle System comprising such an expander.

The invention is defined by the appended independent claims. Embodiments are set forth in the dependent claims, in the attached drawings and in the following description.

According to a first aspect there is provided an expander for use at a maximum internal operating temperature of less than or about 180°C, the expander comprising a housing with a cylindrical inner surface, a stationary shroud arranged along an inner circumference of the inner surface of the housing and with a generally radially inwardly directed first surface exposed to the interior of the housing, and a rotor mounted in the housing and being rotatable around a longitudinal central axis of the housing. A plurality of blades or shrouded blades are arranged circumferentially about the rotor and extending substantially radially from the rotor towards the first surface of the stationary shroud, wherein the blades or the shrouded blades are arranged such that when the expander is in a pre-operating condition a substantially radial gap is formed between a surface of a radially outermost tip of the blades or the shrouded blades and the first surface of the stationary shroud. The material of the blades, or shrouded blades, and alternatively also the stationary shroud comprises at least 80 at.% aluminum, and the blades or shrouded blades and at least the first surface of a stationary shroud if of at least 80 at.% aluminum presents a surface layer having a thickness (d) of from 1 to 1000 µm and an average Vickers hardness of 400 HV or more. The gap between the surface of the radially outermost tip of the blades or the shrouded blades and the first surface of the stationary shroud is such that the gap is defined between two surfaces wherein at least one of the surfaces presents said surface layer.

With at.% is meant atomic percent.

With expander is here meant a device such as an axial steam, vapor or gas turbine, a radial steam or vapor turbine or an impulse steam or vapor turbine (the steam/vapor can be either water or any organic fluid).

With expander is alternatively meant, a scroll expander or a vane expander.

The blade may be the rotor blade carried by the rotor of a steam or vapor turbine and may be of any known type, e.g. curved, tapered and/or twisted blade.

In the case of a scroll expander, the blade is the concentric spiral scroll.

The blade is in the case of a vane expander, the vane.

With maximum internal operating temperature is meant the temperature of a working fluid (steam/vapor of water, organic fluid(s) or mixture of water and organic fluid(s)) when entering the expander.

That the expander is for use at a maximum internal operating temperature of less than or about 180°C is meant that it is not suitable to be used at higher internal temperatures than about 180 °C.

The stationary shroud is a curved stationary body having a concave inner first surface, i.e. a fluid-path surface, and a generally convex back arranged along the inner circumference of the inner surface of the housing. That the shroud is arranged along the inner surface of the housing here means that it is arranged directly on the inner surface of the housing or that it is arranged at a distance from the inner surface. The stationary shroud can for example be a ring or a tube located outside the rotating turbine blade in the radial direction and have an extension in the axial direction that is similar to or larger that the axial extension of the blade. Stationary shrouds are known in the art.

With shrouded blades is meant that at least the radially outermost portion of the blades are covered by a shroud that is a part of or is fastened to the blades and thus rotates with the blades in order to reduce swirl, leakage and other losses, and to stabilize the blades. The shroud could be made up of a plurality of individual shrouds each covering an outermost portion of a blade or the shroud could be in one piece, such in the form of a ring covering the outermost portions of all blades. The term shrouded blade, hence, includes both the blades and the shroud and are known per se. These are preferably made of the same or similar aluminum alloy and have the same surface layer/coating.

During operation of the expander, evaporated or partly evaporated working fluid (steam, vapor, mixture of saturated liquid and saturated vapor or gas) pass through the turbine, affecting the blades with a radial force which cause the rotor with the blades to turn. To achieve a high efficiency, as little as possible of the evaporated working fluid should leak around the tip of the blades or the shrouded blades by passing through the gap between the outermost tip of the blades or the shrouded blades and the adjacent surface of the stationary shroud.

With pre-operating conditions is here meant conditions before the expander is started. During operation of the expander there may be material expansion of rotor, blades, shroud and stationary shroud, thereby changing the size of the gap, i.e. reducing the gap. Rotating parts expand more than stationary parts.

Thermodynamic cycles used for heat recovery from low-temperature heat sources such as industrial waste heat, geothermal heat, biomass combustion, and solar-heat systems, are for example the Organic Rankine Cycle (ORC) and the Kalina Cycle. In an ORC system the maximum internal operating temperature in the expander is often between 80-170 °C. In a Kalina Cycle system the maximum internal operating temperature in the expander is often 100-300 °C depending on the temperature of the heat source and the mixture and concentration of the two fluids making up the working fluid. Hence, the expander as described above is suitable to be used in such systems when the maximum internal operating temperature in the expander is less than or about 180 °C.

The present expander may also be used in other thermodynamic cycles for recovering heat from low-temperature heat sources, both single media and compound media consisting of a mixture of e.g. water and ammoniak which can be viewed as variants of the standard Rankine cycle. Such a cycle can be any cycle in which heat is supplied in a boiler or similar device to partially or fully vaporize a liquid at an increased pressure, expanding the vapor or mixture through a turbine that converts part of the energy to work, followed by a condenser that condensates the vapor to compressed liquid, saturated liquid or at least a lower steam quality (mass of vapor divided på the total mass of the vapor and liquid). After the condenser is a pump that increases the pressure and drives the working fluid forward to the boiler which closes the cycle.

The expander is not for use in a standard Rankine Cycle system in which the maximum internal expander operating temperature levels are about 200-600°C at pressure levels up to several hundred bars.

In some ORC systems and Kalina Cycle systems in use today expanders, such as steam turbines or scroll expanders, optimized for conventional Rankine Cycle systems are used. In other ORC systems standard type compressors driven backwards are used. In conventional steam Rankine Cycle systems temperature levels in the expander are higher than in an ORC system or a Kalina Cycle system. The blades are, therefore, subject to more high temperature corrosion in a steam Rankine Cycle system compared to in an ORC or Kalina Cycle system. In variants of the standard Rankine cycle, such as the Kalina cycle or the Goswami cycle, that may be run using a two-compound mixture of e.g. water and ammoniac, the blades may be subject to severe corrosion even at moderate temperatures of 100-180 °C.

The blading material in a Rankine Cycle system turbine is often titanium alloy, nickel-based steel alloy or surface treated such alloy, which demonstrates good erosion and corrosion resistance together with good mechanical strength. Aluminum cannot withstand the high temperatures in a steam turbine of a conventional Rankine cycle system for prolonged periods of time but will also in a short time be subject to major high temperature ageing, thermal fatigue and erosion in such an extreme environment. If aluminum is used as the blading material in an ORC, Kalina, Goswami cycle or any similar cycle based on the standard Rankine cycle it will also be subject to erosion.

In addition, due to the erosion of the blade the geometry of the blade deteriorates and thereby the aerodynamic performance thereof.

Hence, aluminum is not suitable as the material of blades or shrouded blades in an expander, neither in a standard steam Rankine Cycle system nor in an ORC, Kalina Cycle or any other cycle based on the standard Rankine cycle.

In an ORC, Kalina Cycle, Goswami Cycle or similar cycle system, however, as the temperature levels are lower than in a Rankine Cycle system and when the maximum internal operating temperature of the expander is lower than or about 180°C, an expander with blades comprising at least 80 at.% aluminum and presenting a surface layer having a thickness of from 1 to 1000 µm and having an average Vickers hardness of 400 HV or more may be used.

Such blades exhibit a harder surface, which is more resistant to wear and corrosion compared to a blade of an aluminum/aluminum alloy without such a surface layer. Untreated Aluminum Alloy 6082 for example has an average Vickers hardness of 100 -120 HV.

Thereby, the time such blades may be used in an ORC, Kalina Cycle or similar cycle system without being subject to erosion (under the same temperature and pressure conditions) compared to untreated Aluminum Alloy 6082 may be extended at least 2 times, at least 5 times, at least 10 times, at least 50 times, at least 100 times, at least 500 times or at least 1000 times.

In addition, due to less erosion the aerodynamic performance of such a blade is maintained for a longer period of time compared to a blade comprising aluminum/aluminum alloy without such a surface layer.

Aluminum/aluminum alloys are less expensive than for example titanium alloys. In addition, the production time is shorter and the wear on the tools used for producing the blades is lower than for titanium. Hence, production and material costs can be reduced for ORC, Kalina Cycle or similar cycle systems comprising expanders with blades comprising at least 80 at.% aluminum and presenting a surface layer having a thickness of from 1 to 1000 µm and having an average Vickers hardness of 400 HV or more.

In order achieve a high efficiency of the expander, as little as possible of the evaporated working fluid should leak around the blades or the shrouded blades by passing through the gap between the outermost tip of the blades or the shrouded blades and the first surface of the stationary shroud. Hence, it may be necessary to keep the gap between the blades rotating at high speed and the housing surrounding them small for as long as possible. The gap dimension of this gap is known not to be constant, but is subject to changes during the different operating phases of the expander. Thus, among other things, the blades experience elongation in the radial direction under high working loads, due to thermal stress and the acting centrifugal force. In addition, the stationary shroud is also caused to expand.

After the expander has been operating at a certain load or varying load conditions for a period of time, the components reach a steady state operating condition. Since the various parts of the turbine in general have different temperatures, the thermal expansion is different in the parts, causing the gap between stationary and rotating parts to change with temperature of the working fluid and turbine loading. During un-steady state conditions such as start and stop of the turbine, the time constant associated with temperature increase/decrease is different for the turbine parts. Thus, during such conditions, the gap between rotating and stationary parts of the turbine also varies with time. It is desirable that the gap between the shrouded/unshrouded blade tips and the stationary shroud is as small as possible to limit leakage which decrease turbine performance.

It is known in the art that reducing the gap cannot be accomplished by simply positioning the components so that the gap is minimal under one operating condition, as the configuration of the components forming the gap must account for all possible operating conditions, and start, stop and emergency shutdown conditions. Rotating and stationary turbine parts change temperature at different rates causing the gap distance to vary. In emergency shutdown conditions, the diameter of the stationary shroud reduces at a faster rate than the length of the turbine blades. Therefore, unless the components have been positioned so that a sufficient gap has been established between the turbine blades and the turbine shroud under operating conditions, the turbine blades may strike the stationary shroud because the diameter of components of the shroud is reduced at a faster rate than the turbine blades. Collision of the turbine blades and the shroud often causes severe blade tip rubs and may result in damage. Thus, a need exists for a system for reducing gaps between turbine blade tips and a surrounding shroud under operating conditions while accounting for necessary clearance under start, stop and emergency shutdown conditions.

In order to prevent the blade tips of the blades and the surrounding housing/stationary shroud from being damaged in systems where "contact" is allowed between the blade tips of the blades and the surrounding housing /stationary shroud a so-called abrasive coating may be applied to the blade tips or to the shroud of shrouded blades, while the surrounding housing is coated with a corresponding wear or abrasion coating.

When the blade tip or shrouded blade tip brushes against the abrasion coating introduced into the surrounding housing, the abrasive particles applied to the blade tip cut or rub into the abrasion coating and wear it away. At the same time, the abrasion of the abrasion coating is also associated with a certain amount of wear of the abrasive coating.

Rapid wear of the abrasive coating proves to be disadvantageous, since this leads, on one hand, to an increase in the gap between the blade tip and the surrounding housing, which, as described above, results in efficiency losses. On the other hand, the premature wear of the abrasive coating also means that the blade tips of the turbine blades are subject to premature wear themselves, i.e., practically ground down, which in turn leads to costly repairs of the blade tips and the shortening of the service life of the gas-turbine engine.

It is also conventional to use blades with "weakened" tips which are abraded/worn down or bent when striking the stationary shroud.

For conventional expanders a gap between the blade tips and the shroud, in pre-conditions, is in the area of 0.45 mm.

With the expander described above, the blades, or shrouded blades, and alternatively also the stationary shroud comprises at least 80 at.% aluminum, and the blades or shrouded blades and at least the first surface of a stationary shroud if of at least 80 at.% aluminum presents a surface layer having a thickness (d) of from 1 to 1000 µm and an average Vickers hardness of 400 HV or more. The gap formed between the surface of the radially outermost tip of the blades or the shrouded blades and the first surface of the stationary shroud is then defined between two surfaces wherein at least on eof the surfaces presents this surface layer.

With the present expander there is no use of abrasive coatings on the first surface of the stationary shroud or on the blade tips or shrouded blade tips. Further, the blade tips or shrouded blade tips are not weakened.

If the stationary shroud is of aluminum, the first surface thereof has the same surface layer as the blade or the shrouded blade and the gap is then defined between two surface treated aluminum components.

Temporary disturbances as vibrations, stops, and temporary collisions of the blades or shrouded blades and the stationary shroud with the present expander has shown to result in no damage of the blades or shrouded blades. Thereby, it is possible to use a small gap between the tips of the blades/shrouded blades and the first surface of the stationary shroud.

In one embodiment the substantially radial gap between the surface of the radially outermost tip of the blades or the shrouded blades and the first surface of the stationary shroud in the pre-operating condition is 0.05-0.5 mm, 0.05-0.4 mm, 0.05-0.3 mm, 0.05-0.2 mm, 0.05-0.15mm, 0.1-0.5 mm, 0.1-0.4 mm, 0.1-0.3 mm, 0.1-0.2 mm, 0.1-0.15mm, 0.2-0.5 mm, 0.2-0.4 mm, 0.2-0.3 mm, 0.3-0.5 mm or 0.30-0.4 mm.

Alternatively, the gap may be 0.5 mm-1mm, 0.5 mm-0.9 mm, 0.5-0.8 mm, 0.5-0.7 mm, 0.5-0.6 mm, 0.6 mm-1mm, 0.6 mm-0.9 mm, 0.6-0.8 mm, 0.6-0.7 mm, 0.7 mm-1mm, 0.7 mm-0.9 mm, 0.7-0.8 mm, 0.8 mm-1mm, 0.8 mm-0.9 mm, or 0.9-1mm.

Even if there is temporary contact between the tips of the blades or the shrouded blades and the first surface of the stationary shroud, there is no wear down of the parts.

Thereby, operating costs may be reduced as there is less damage to crucial parts of the expander (blades, shrouded blades and stationary shroud), and less number of emergency stops during operation due to worn down parts. Further, the efficiency of the expander is high as little evaporated working fluid passes the narrow gap between the blades/shrouded blades and the stationary shroud.

The chosen gap distance depends on the expander application and also depends on manufacturing tolerances, temperature increases and thereby material expansion during operation of the expander, play in bearings of rotor axis, and rotor axis deflection.

In one alternative embodiment, the stationary shroud may be made of steel, steel alloy, titanium or titanium alloy.

With such a stationary shroud similar results as obtained with an aluminum stationary shroud with a surface layer on at least the first surface may be obtained.

The material may comprise 80-100 at.% aluminum, 85-100 at.% aluminum, 90-100 at.% aluminum, 95-100 at.% aluminum, 80-95 at.% aluminum, 80-90 at.% aluminum or 80-85 at.% aluminum.

The material may further comprise one or more aluminum alloying elements selected from a group comprising copper, magnesium, silicon, zinc, iron, manganese, titanium and chromium.

A total content of the one or more alloying elements in the material may be 0.01 to 20 at.%, 0.01 to 15 at.%, 0.01 to 10 at.%, 0.01 to 5 at.%, 5 to 20 at.%, 10 to 20 at.% or 15 to 20 at.%.

When the total content of aluminum and aluminum alloying element(s) in the material does not sum up to 100%, the rest may comprise contaminants.

The surface layer may have a thickness of from 10 to 700 µm, from 25 to 500 µm, from 30 to 200 µm, from 20 to 100 µm, from 50 to 150 µm or from 40 to 80 µm,
The surface layer may have an average Vickers hardness of 400-3000 HV, 600-2500, 800-2000 HV, 1000-1800 HV, 1200-1500 HV or 600-1600 HV.

The surface layer may have a surface roughness k of 1/100 to 1/5, 1/100 to 1/10, 1/100 to 1/25, 1/100 to 1/50, 1/100 to 1/75, 1/75 to 1/5, 1/50 to 1/5, 1/25 to 1/5, or 1/10 to 1/5 of the surface layer thickness.

The surface roughness of the surface layer of the blade or shrouded blade affects the aerodynamic losses and thereby the performance in expanders. The losses arise due to several different effects, including augmentation turbulent transport in the boundary layers developing along the (rough) surface, increased boundary layer thickness, boundary layer separation and increased turbulent diffusion.

"k" is an arithmetic average of absolute values. The lower the "k" value is the smother the surface and, hence, the aerodynamic losses.

The blade or shrouded blade may be a solid aluminum or aluminum alloy component with
the surface layer formed thereon.

The surface layer may comprise Al₂O₃.

The surface layer may comprise SiO₂.

A trailing edge of the blade may have a radius which is 0.05 to 0.3 mm, 0.1 to 0.3 mm, 0.15 to 0.3 mm 0.20 to 0.3 mm, 0.25 to 0.3 mm, 0.05 to 0.25 mm, 0.05 to 0.2 mm, 0.05 to 0.15 mm, or 0.05 to 0.1 mm.

With trailing edge is here meant a rear edge of the blade, where a flow separated by a leading edge of the blade rejoins.

According to a second aspect there is provided a use of the expander described above in an Organic Rankine Cycle or Kalina Cycle system.

According to a third aspect there is provided an Organic Rankine Cycle system comprising an organic working fluid, a heating and evaporating arrangement for heating and evaporating the working fluid, and an expander as described above arranged to convert energy in the evaporated working fluid from the heating and evaporating arrangement into rotational energy.

The organic working fluid is a fluid having a liquid-vapor phase change, or boiling point, occurring, under the same environmental conditions such as pressure, at a lower temperature than the water-steam phase change. The organic working fluid is a fluid having a liquid-vapor phase change occurring, at a pressure of 1 atmosphere (1atm), at a temperature below 100°C.

The organic working fluid may be selected from a group consisting of refrigerants (e.g. R245fa and R134a), hydrocarbons such as n-pentane and toluene, thermal oils and silicon oils.

The heating and evaporating arrangement may comprise a heating source which may be any source of waste heat from e.g. the chemical industry, the food and beverage industry, the rubber and plastic industry, the metal and mining industry, the pulp and paper industry, the glass, cement and ceramic industry, or from for example diesel generators.

The arrangement may further comprise a heat exchanger heating the working fluid utilizing heat from the heating source, and an evaporator evaporating heated working fluid from the heat exchanger.

The Organic Rankine Cycle system may further comprise an energy converter which could be a power generator connected to the rotor and arranged to convert rotational energy to electrical energy. The energy converter could alternatively be a pump or a compressor etc. connected to the rotor.

According to a fourth aspect there is provided a method of producing an Organic Rankine Cycle system comprising the steps of: providing an organic working fluid, providing a heating and evaporating arrangement for heating and evaporating the working fluid, providing an expander as described above for conversion of energy in the evaporated working fluid from the heating and evaporating arrangement into work in the form of rotational energy, providing an energy converter connected to the rotor for converting rotational energy of the rotor to another energy form.

### Brief Description of the Drawings

Fig. 1 shows a schematic overview of an ORC system comprising an expander.
Fig. 2 shows a blade for a steam turbine.
Fig. 3 shows a cross-sectional view taken along line A-A in Fig. 2.
Fig 4a is a schematic cross-section of an expander showing a shrouded blade and a radial gap between the shrouded blade and a stationary shroud.
Fig. 4b is a schematic cross-section of an expander showing a blade and a radial gap between the blade and a stationary shroud.

### Detailed Description

A thermal power plant transforms energy from a heat source into work. The Rankine cycle is the thermodynamic cycle most often realized in thermal power plants.

Variants of the Rankine Cycle, such as the Organic Rankine Cycle (ORC), Kalina Cycle and Goswami Cycle are examples of thermodynamic cycles which allow heat recovery from low-temperature heat sources such as industrial waste heat, geothermal heat, biomass combustion, and solar-heat systems. The low-temperature heat is converted into useful work which can be converted into other energy forms such as electricity.

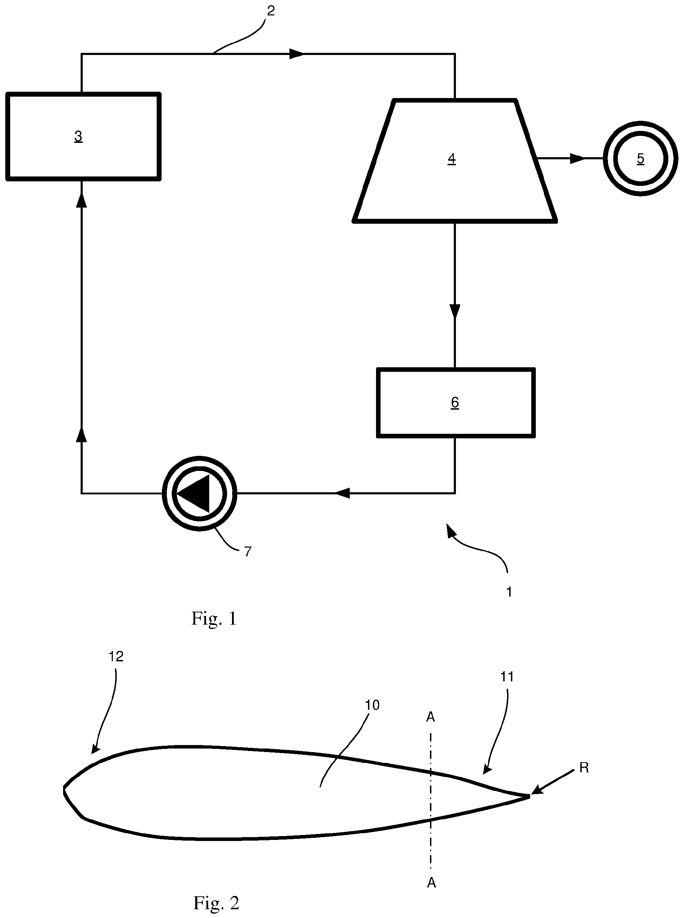

An Organic Rankine Cycle (ORC) system 1 comprises, see Fig. 1, an organic working fluid 2 in a closed circuit. The working fluid 2 is an organic, high molecular mass fluid with a liquid-vapor phase change, or boiling point, occurring at a lower temperature than the water-steam phase change. The organic working fluid 2 is a fluid having a liquid-vapor phase change occurring, at an environmental pressure of 1 atmosphere (1 atm), at a temperature below 100°C. The organic working fluid 2 may be selected from a group consisting of refrigerants, hydrocarbons such as n-pentane and toluene, thermal oils, silicon oils, and dry organic fluids. Selection of the organic working fluid depends on application, heat source property, working fluid thermodynamic properties, and operating conditions.

The ORC system 1 comprises further a heating and evaporating arrangement 3 for heating and evaporating the working fluid 2. The heating and evaporating arrangement 3 may comprise a heating source which may be any source of waste heat from the chemical industry, the food and beverage industry, the rubber and plastic industry, the metal and mining industry, the pulp and paper industry, the glass, cement and ceramic industry, or from for example diesel generators. The arrangement 3 further comprises a heat exchanger heating the working fluid utilizing heat from the heating source, and an evaporator evaporating heated working fluid from the heat exchanger.

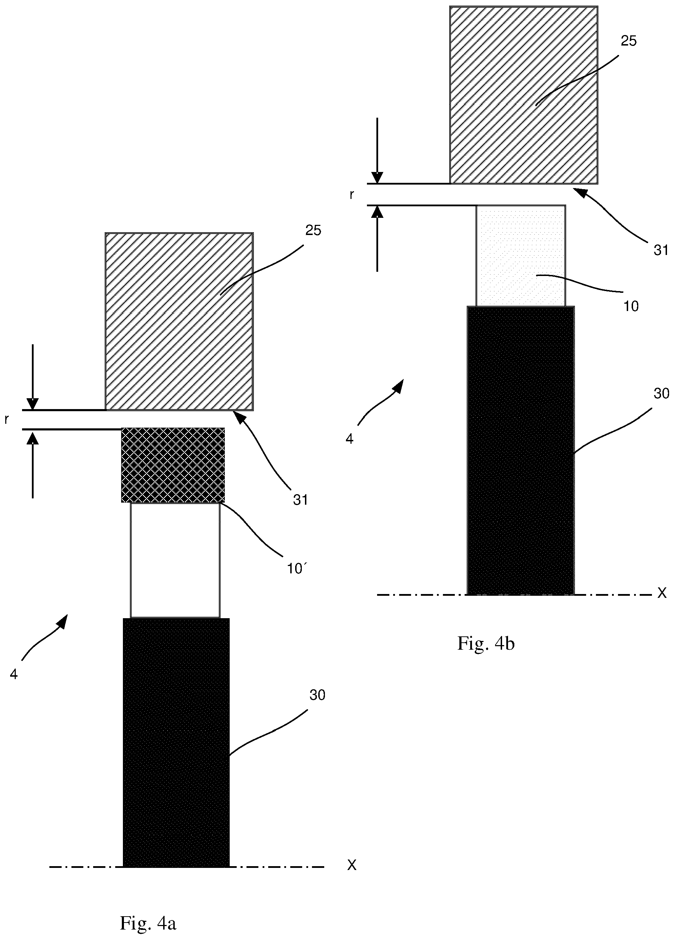

The ORC system 1 comprises an expander 4, Figs 4a and 4b, which may be selected from a group consisting of an axial steam or vapor turbine, a radial steam or vapor turbine, an impulse steam or vapor turbine, a positive displacement expander, a screw expander, a scroll expander or a vane expander.

The expander 4 comprises a housing (not shown) with a cylindrical inner surface, a stationary shroud 25 arranged along an inner circumference of the inner surface of the housing and with a generally radially inwardly directed first surface 31 exposed to the interior of the housing, and a rotor 30 mounted in the housing and being rotatable around a longitudinal central axis X of the housing. The rotor 30 is provided with blades 10 (Fig. 4b) or shrouded blades 10' (Fig. 4a) arranged circumferentially about the rotor 30 and extending substantially radially from the rotor 30 towards the first surface 31 of the stationary shroud 25, wherein the blades 10 or the shrouded blades 10' are arranged such that when the expander 4 is in a pre-operating condition a substantially radial gap r is formed between a radially outermost tip of the blades 10 or the shrouded blades 10' and the first surface 31 of the stationary shroud 25.

With shrouded blades 10' is meant that the at least the radially outermost portion of the blades are covered by a shroud. The shroud rotates with the blades. The shroud could be made up of a plurality of individual shrouds each covering an outermost portion of a blade or the shroud could be in one piece, such in the form of a ring covering the outermost portions of all blades. The term shrouded blade, hence, includes both the blades and the shroud.

The expander 4 is arranged to convert energy in the evaporated working fluid 2 from the heating and evaporating arrangement 3 into rotational energy.

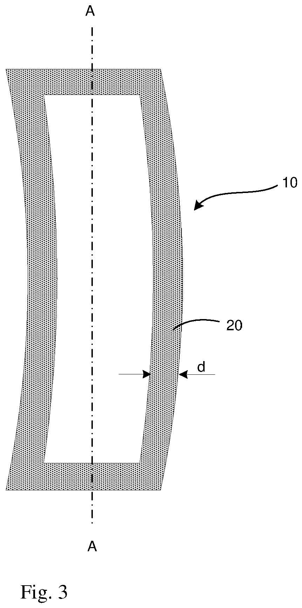

The blade 10 or shrouded blade 10' may be the rotor blade carried by the rotor of a steam turbine and may be of any known type, e.g. cylindrical with a constant section, tapered (Fig. 2 and 3) and/or twisted.

In the case of an axial steam turbine, the admission ratio may be less than 0.5, less than 0.3, less than 0.2 or less than 0.1. (The admission ratio is a measure of to which degree the turbine inlet is open, where 1 means fully open and 0.5 means that half of the inlet is open.)

An energy converter 5 may be connected to the rotor 30 and arranged to convert rotational energy of the rotor to another energy form. The energy converter could be a power generator connected to the rotor and arranged to convert rotational energy to electrical energy. The energy converter could alternatively be a pump or a compressor etc. connected to the expander 4.

A condenser 6 may be arranged to cool down evaporated working fluid 2 from the expander 4 and a pump 7 may be arranged for pumping condensed working fluid 2 from the condenser 6 back to the heating and evaporating arrangement 3. A flow of water in the condenser 6 or ambient air may be used as coolant.

The Kalina Cycle is a cycle similar to the ORC Cycle. In a Kalina Cycle system (not shown) a gaseous working fluid including at least two components having different boiling points is used as the working fluid to transform its energy into a useable form. The concentration of one of the components changes in the cycle. Examples of working fluids are ammonia and water or organic mixtures, such as a mixture of R22 and R114 or a mixture of hexamethyldisiloxane and decamethyltetrasiloxane.

The gaseous working fluid is expanded in an expander. The expander 4 may be the same kind of expander as discussed for the ORC system above. The components of the gaseous working fluid from the expander 4 are separated, condensed separately, and then the components are mixed again before being fed to the heating and evaporating arrangement.

The material of the blades 10, or shrouded blades 10', and alternatively also the stationary shroud 25 may comprise at least 80 at.% aluminum, and the blades 10 or shrouded blades 10' and at least the first surface 31 of a stationary shroud 25 if of at least 80 at.% aluminum presents a surface layer having a thickness (d) of from 1 to 1000 µm and an average Vickers hardness of 400 HV or more. The gap r between the surface of the radially outermost tip of the blades 10 or the shrouded blades 10' and the first surface 31 of the stationary shroud 25 in pre-operating conditions is, hence, defined between two surfaces wherein at least one of the surfaces presents said surface layer.

In one embodiment the stationary shroud is of at least 80 at.% aluminum and presents the surface layer on at least its first surface, such that the gap r is defined between two surfaces having this surface layer.

The material may comprise 80-100 at.% aluminum, 85-100 at.% aluminum, 90-100 at.% aluminum, 95-100 at.% aluminum, 80-95 at.% aluminum, 80-90 at.% aluminum or 80-85 at.% aluminum.

The material may further comprise one or more aluminum alloying elements selected from a group comprising copper, magnesium, silicon, zinc, iron, manganese, titanium and chromium.

The total content of the one or more alloying elements in the material is 0.01 to 20 at.%, 0.01 to 15 at.%, 0.01 to 10 at.%, 0.01 to 5 at.%, 5 to 20 at.%, 10 to 20 at.% or 15 to 20 at.%.

One example of such an aluminum alloy is Al-Mn-Mg-Si (96.5-98.3 at.%; 0.4-1 at.%; 0.6-1.2 at.%; 0.7-1.3 at.%).

Another example (EN AW 6082) consist of Mn 0.40 - 1.00 at.%, Fe 0.0 - 0.50 at.%, Mg 0.60 - 1.20 at.%, Si 0.70 - 1.30 at.%, Cu 0.0 - 0.10 at.%, Zn 0.0 - 0.20 at.%, Ti 0.0 - 0.10 at.%, Cr 0.0 - 0.25 at.%, aluminum (Al) balance.

Yet another example is EN AL 5052 that consists of Mg 2.20 - 2.80 at.%, Cr 0.15 - 0.35 at.%, Fe 0.0 - 0.40 at.%, Si 0.0 - 0.25 at.%, Others total 0.0 - 0.15 at.%, Mn 0.0 - 0.10 at.%, Zn 0.0 -0.10 at.%, Cu 0.0 - 0.10 at.%, other (each) 0.0 - 0.05 at.%, aluminum (Al) Balance.

The blade 10 or shrouded blade 10' and at least the first surface 31 of the stationary shroud 25 if made of aluminum may present a surface layer 20 having a thickness of from 10 to 700 µm, from 25 to 500 µm, from 30 to 200 µm, from 20 to 100 µm, from 50 to 150 µm or from 40 to 80 µm.

The surface layer 20 may have an average
Vickers hardness of 400-3000 HV, 600-2500 HV, 800-2000 HV, 1000-1800 HV, 1200-1500 HV or 600-1600 HV.

The blade 10 or shrouded blade 10' may be a solid aluminum or aluminum alloy component with the surface layer 20 formed thereon.

In one alternative embodiment, the stationary shroud 25 may be made of steel or any alloy thereof, or titanium or any alloy thereof.

The blade 10 may be an aluminum or aluminum alloy component provided with an enclosed space (not shown).

In the enclosed space there may be a vacuum. Alternatively, the enclosed space may be filled with a gas or a core of a material different from aluminum or aluminum alloy. The material of the core may for example be a vibration damping material.

The thickness of the wall of the component provided with an enclosed space may be between 1 mm and 100 mm.

In one example, the blade 10 or the shrouded blade 10 may comprise a through hole providing a cooling channel for cooling medium (not shown).

When the total content of aluminum or aluminum alloying element(s) in the material does not sum up to 100%, the rest may comprise contaminants.

Alternatively, in such case the total amount of aluminum or aluminum alloy in the material is less than 100 at.%, another suitable material for example steel/steel alloy or titanium/titanium alloy may be provided at an outwardly exposed portion of the blade 10 such at a leading edge 12 of the blade 10.

The surface layer 20 may comprise Al₂O₃.

A surface layer 20 comprising Al₂O₃ may further comprise a dopant, such as ZrO₂ and/or CeO₂.

The surface layer 20 may comprise SiO₂.

In other examples, the surface layer 20 may comprise Ni₃Al, Al₃Ni, Ni, NiO, NiAl₂O₄, Cr₂O₃ or TiO₂.

In a conventional Rankine Cycle the maximum internal operating temperature levels in the expander are about 200-600°C at pressure levels up to several hundred bars. In an ORC system the maximum internal operating temperature in the expander is often between 80-170 °C. In a Kalina Cycle system the maximum internal operating temperature in the expander is often 100-300 °C.

In some ORC systems and Kalina Cycle systems in use today expanders such as steam turbines or scroll expanders optimized for conventional Rankine Cycle systems are used. In some systems standard type compressors driven backwards are used.

As temperature levels in the expander of a conventional steam Rankine Cycle system are higher than in an ORC system or a Kalina Cycle system, the blades are subject to more high temperature corrosion in a steam Rankine Cycle system compared to in an ORC or Kalina Cycle system.

The blading material in a Rankine Cycle system turbine is often titanium alloy, nickel-based steel alloy or surface treated such alloy, which demonstrates good erosion and corrosion resistance together with good mechanical strength. Aluminum cannot withstand the temperatures in a steam turbine of a conventional Rankine cycle system for prolonged periods of time but will also in a short time be subject to major high temperature ageing, thermal fatigue and erosion in such an extreme environment. If aluminum is used as the blading material in an ORC, Kalina or Goswami cycle or any similar cycle based on the standard Rankine cycle it will also be subject to erosion.

In addition, due to the erosion of the blade the geometry of the blade deteriorates and thereby the aerodynamic performance thereof.

Hence, aluminum is not suitable as the material of blades in an expander, neither in a standard steam Rankine Cycle system nor in an ORC, Kalina Cycle or any other cycle based on the standard Rankine cycle.

In for example an ORC, Kalina or Goswami Cycle system, however, when the maximum internal operating temperature is less than or about 180°C an expander with blades or shrouded blades comprising at least 80 at.% aluminum and presenting a surface layer 20 having a thickness of from 1 to 1000 µm and having an average Vickers hardness of 400 HV or more can be used.

Such blades exhibit a harder surface, which is more resistant to wear and corrosion compared to a blade of an aluminum/aluminum alloy without such a surface layer. (Untreated Aluminum Alloy 6082 for example has an average Vickers hardness of 100 -120 HV.)

The time such blades may be used in an ORC or Kalina Cycle system without being subject to erosion (under the same temperature and pressure conditions) compared to untreated Aluminum Alloy 6082 may be extended.

In addition, due to less erosion, the aerodynamic performance of such a blade is maintained for a longer period of time compared to an aluminum/aluminum alloy without such a surface layer.

Aluminum/aluminum alloys are less expensive, the production time is shorter and the wear on the tools used for producing the blades 10 or shrouded blades 10' is much lower than for titanium alloys. Hence, production and material costs can be reduced for ORC, Kalina Cycle or similar cycle systems comprising expanders 4 with blades 10 or shrouded blades 10' comprising at least 80 at.% aluminum and presenting a surface layer 20 having a thickness of from 1 to 1000 µm and having an average Vickers hardness of 400 HV or more compared to expanders provided with blades or shrouded blades comprising titanium.

A method of producing an Organic Rankine Cycle system 1 comprises the step of providing an organic working fluid 2, providing a heating and evaporating arrangement 3 for heating and evaporating the working fluid 2, providing an expander 4 as discussed above for conversion of energy in the evaporated working fluid 2 from the heating and evaporating arrangement 3 into rotational energy, providing an energy converter 5 connected to the rotor for converting rotational energy of the rotor to another energy form.

One method for providing the blade 10 or shrouded blade 10' or at least the first surface 31 of the stationary shroud 25 with such a surface layer 20 is electrochemical surface treatment, such as the Keronite® process (US 6365028 B) which uses Plasma Electrolytic Oxidation (PEO) to transform the surface of aluminum/aluminum alloy into a dense, hard ceramic with resistance to corrosion and wear, by surface conversion of the aluminum/aluminum alloy into alumina (Al₂O₃), in both amorphous and hard crystalline forms. The oxide layer presents a protective barrier against corrosion by isolating the substrate metal from corrosive environments.

In another suitable electrochemical surface treatment by Keronite® (see US2012031765) a plasma electrolytic oxidation step is combined with a chemical passivation step.

With the Keronite® electrochemical surface treatment process a surface layer may be obtained having a Vickers hardness of about 1200 HV or more.

Another electrochemical surface treatment which may be used for treating the aluminum/aluminum alloy is hard anodization. Most alloys can be hard anodized. This is a technique to thicken the natural oxide layer by placing the metal as the anode in an electrolytic cell. There are different systems for anodizing but all of them intend to increase the oxide layer to a thickness of 1000-10 000 times its natural thickness. Dilute sulphuric acid at room temperature is normally used as the electrolyte. Anodizing gives a porous oxide film with micro-pores. As an after-treatment the pores are sealed to obtain an impermeable surface.

With hard ionidization a surface layer may be obtained having a Vickers hardness of 400 HV or more (often 400-600 HV) and a coat thickness of approximately 25 - 80 µm.

The aluminum/aluminum alloy can be surface treated in a number of different ways apart from the electrochemical processes discussed above.

The blade 10, shrouded blade 10' and the first surface 31 of the stationary shroud 25 may be provided with a surface layer 20 of SiO₂ which preferably is exposed outwardly in a direction normal to a surface of the blade 10. Such a surface layer 20 may for example be applied by sol-gel dip-coating.

Tufram ® is a hard anodized layer that is impregnated and surface treated with selected fluorine plastic materials. Through subsequent heat treatment a strong bond is created between the aluminium oxide and fluorine plastic producing a hard, durable and corrosion resistant surface which withstands continuous use at temperatures from -220 to +350 °C.

Laser cladding involves hard particles, for example, silicon carbide, tungsten or diamonds, being baked into the surface coat, which gives low friction, good resistance to wear and a high bearing capacity on the surface. Plastic coating gives an area with high or low friction, protection against wear,

Surface coating with e.g. chrome, tin, nickel, silver or copper is carried out to give the required characteristics or functionality such as corrosion resistance, hardness, wear resistance and temperature resistance.

The invention is not limited to the specific surface layers 20 exemplified here or to the exemplified methods of providing such surface layers. It is to be understood that also not mentioned surface layers or methods for providing such surface layers, which surface layers are suitable for an aluminum or aluminum alloy blade 10, shrouded blade 10' and first surface 31 of stationary shroud 25 and having a thickness of from 1 to 1000 µm and an average Vickers hardness of 400 HV or more, fall within the scope of the invention.

Surface treatments that add a surface layer 20 of e.g. Al₂O₃ to the blade 10 or shrouded blade 10' will change the roughness and topology of the surface of the blade 10, 10', and can be used to improve the flow situation surrounding the blades 10, 10' and vanes in the rotor/stator. For example, small scratches present on the metal surface before the surface treatment will be covered by the added surface material (e.g. Al₂O₃), thus giving a smoother surface with a reduced skin friction and thereby reduced flow losses.

The surface roughness of turbine blades and vanes affect the aerodynamic losses and thereby performance in turbines. It has been shown that the surface roughness of a turbine blade/vane has a substantial effect on the magnitudes of aerodynamic losses. The losses arise due to several different effects, including augmentation turbulent transport in the boundary layers developing along the (rough) surface, increased boundary layer thickness, boundary layer separation (especially for turbulent boundary layers at moderate to high Reynolds numbers) and increased turbulent diffusion.

There are a number of different ways to quantify surface roughness. The most commonly used parameter to describe surface roughness is the arithmetic average of absolute values (k), although for example the root mean squared (k_{RMS}) value is also used. In fluid dynamics, it is very common to describe or approximate a surface roughness with an equivalent sandgrain roughness (ks). In turbine applications, ks is sometimes related to the cord length (c) of the blade. A smooth (polished) turbine blade has a ks/c close to zero, and a rough surface may have a ks/c>0.002. It is also possible by using certain algorithms to translate k to ks and vice versa. In turbine applications, a smooth, fairly rough and rough surface may have a k of 5 µm, 25 µm and 65 µm, respectively. A surface treatment consisting of e.g. Al₂O₃ applied by PEO typically has a surface roughness k of 1/10 of the layer thickness d, meaning a k of about 20 µm for a 200 µm thick layer. Polishing can reduce k to <1/30 of the layer thickness d.

The blade 10, 10' of the present expander 4 may present a surface layer 20 having a surface roughness k of 1/100 to 1/5, 1/100 to 1/10, 1/100 to 1/25, 1/100 to 1/50, 1/100 to 1/75, 1/75 to 1/5, 1/50 to 1/5, 1/25 to 1/5, or 1/10 to 1/5 of the surface layer 20 thickness d.

For turbine vanes/blades at Mach numbers between 0.5 and 1, a surface roughness of k=25 µm and k=60 µm can typically have an integrated aerodynamic loss of 30 % and 50 % higher, respectively, than that of a smooth surface (k=0.5 µm), It is also possible to reduce the overall flow losses of a blade/vane by affecting the transition from a laminar to a turbulent boundary layer. This may be achieved for example by increasing the surface roughness at a certain distance from the leading edge 12.

These two effects may also be used simultaneously, for example a smooth surface close to a leading edge 12 of the blade (Fig. 2) to reduce the skin friction and a rougher surface starting at a certain distance downstream of the leading edge 12 to control the boundary layer transition and separation. The surface topology and roughness of the treated surface may further be improved by e.g. polishing to achieve an even finer surface, or by e.g. etching and blasting to achieve a rougher surface.

A surface treatment may in the case of a surface material with stronger/better mechanical properties (i.e. yield strength, Young's modulus etc) than the material of the blade 10 be used to reduce the flow losses at the trailing edge by facilitating a thin trailing edge and/or a small radius at/of the trailing edge while maintaining overall blade/vane strength, e.g. bending strength and resistance to fatigue and flutter. Equivalently, it is possible to achieve a stronger blade while keeping the trailing edge losses constant. The flow losses at the trailing edge is affected both by the thickness and shape of the trailing edge. By a combination of material, manufacturing method and surface treatment, the trailing edge and its losses can be optimized for the actual turbine part or application as well as flow situation for specific rotor/stator blades. Altogether, this is affected by by e.g. turbine load, degree of stage reaction, Reynolds number, compressibility, turbulence intensity, Mach number and surface roughness.

A trailing edge 11 of the blade 10, 10' may have a radius R which is 0.05 to 0.3 mm, 0.1 to 0.3 mm, 0.15 to 0.3 mm 0.20 to 0.3 mm, 0.25 to 0.3 mm, 0.05 to 0.25 mm, 0.05 to 0.2 mm, 0.05 to 0.15 mm or 0.05 to 0.1 mm, see Fig. 2.

For a blade comprising aluminum or aluminum alloy not provided with a surface layer having a thickness of from 1 to 1000 µm and having an average Vickers hardness of 400 HV or more, a typical radius of the trailing edge is between 0.4 and 0.8 mm.

By using a surface material with a lower thermal conductivity than the aluminum/aluminum alloy in the blade 10, it is also possible to increase the resistance to thermal fatigue of the blade 10 readily arising due to the cyclic temperature change of the expander 4, especially in expanders 4 with low admission ratios.

Also other parts of an expander 4 comprised in the ORC or Kalina Cycle system 1 and affected by the working fluid, such as stator blades and rotor may also comprise at least 80 at.% aluminum and present a surface layer 20 having a thickness of from 0.1 to 1000 µm and having an average Vickers hardness of 400 HV or more to avoid erosion of these parts.

In order achieve a high efficiency in the expander, as little as possible of the evaporated working fluid should leak around the blades 10 or the shrouded blades 10' by passing through the gap r between the surface of the outermost tip of the blades 10 or the shrouded blades 10' and the first surface 31 of the stationary shroud 25.

Reducing the gap r cannot be accomplished by simply positioning the components so that the gap r is minimal under one operating condition, as the configuration of the components forming the gap r must account for all possible operating conditions and start, stop and emergency shutdown conditions. Rotating and stationary turbine parts change temperature at different rates causing the gap distance r to vary. Therefore, unless the components have been positioned so that a sufficient gap has been established between the turbine blades and the turbine shroud under all operating conditions, the turbine blades may strike the stationary shroud because the diameter of components of the shroud is reduced at a faster rate than the turbine blades. It is desirable that the gap r between the blade tips and the stationary shroud be as small as possible to limit leakage past the blade tips during all different operating conditions.

With the present expander there is no use of abrasive coatings on the first surface 31 of the stationary shroud 25 or on the blade 10 tips or shrouded blade 10' tips. Further, the blade tips or shrouded blade tips are not weakened.

Temporary disturbances as vibrations, stops, and temporary collisions of the blades or shrouded blades and the stationary shroud with the present expander 4 has shown to result in no damage of the blades 10 or shrouded blades 10'. Thereby, it is possible to use a small gap between the tips of the blades/shrouded blades and the first surface of the stationary shroud.

The substantially radial gap between the surface of the radially outermost tip of the blades or the shrouded blades and the first surface of the stationary shroud in the pre-operating condition may be 0.05-0.5 mm, 0.05-0.4 mm, 0.05-0.3 mm, 0.05-0.2 mm, 0.05-0.15mm, 0.1-0.5 mm, 0.1-0.4 mm, 0.1-0.3 mm, 0.1-0.2 mm, 0.1-0.15mm, 0.2-0.5 mm, 0.2-0.4 mm, 0.2-0.3 mm, 0.3-0.5 mm or 0.30-0.4 mm.

Alternatively, the gap r may be 0.5 to 1mm.

Even if there is temporary contact between the tips of the blades 10 or the shrouded blades 10' and the first surface 31 of the stationary shroud 25, there is no wear down of the parts.

Thereby, operating costs may be reduced as there is less damage to crucial parts of the expander (blades, shrouded blades and stationary shroud), and less number of emergency stops during operation due to worn down parts. Further, the efficiency of the expander 4 is high as little evaporated working fluid passes the narrow gap r between the blades/shrouded blades and the stationary shroud.

The chosen gap distance depends on the expander application and also depends on manufacturing tolerances, temperature increases and thereby material expansion during operation of the expander, play in bearings of rotor axis, and rotor axis deflection.

In an alternative embodiment when the stationary shroud is made of steel or steel alloy or titanium or titanium alloy similar results as obtained with an aluminum stationary shroud with a surface layer on at least the first surface may be obtained.

Some specific embodiments will be set forth in the following numbered points:
Point 1. An expander (4) for use at a maximum internal operating temperature of less than or about 180°C, the expander comprising:
   - a housing with a cylindrical inner surface;
   - a stationary shroud (25) arranged along an inner circumference of the inner surface of the housing and with a generally radially inwardly directed first surface (31) exposed to the interior of the housing;
   - a rotor (30) mounted in said housing and being rotatable around a longitudinal central axis of said housing;
   - a plurality of blades (10) or shrouded blades (10') arranged circumferentially about said rotor (30) and extending substantially radially from said rotor towards the first surface of the stationary shroud (25), wherein the blades (10) or the shrouded blades (10') are arranged such that when the expander (4) is in a pre-operating condition a substantially radial gap (r) is formed between a surface of a radially outermost tip of the blades (10) or the shrouded blades (10') and the first surface (31) of the stationary shroud (25);
   **characterized** in that
   the material of the blades (10), or shrouded blades (10'), and alternatively also the stationary shroud (25) comprises at least 80 at.% aluminum, and the blades (10) or shrouded blades (10') and at least the first surface (31) of a stationary shroud (30) if of at least 80 at.% aluminum presents a surface layer (20) having a thickness (d) of from 1 to 1000 µm and an average Vickers hardness of 400 HV or more, such that the gap (r) is defined between two surfaces wherein at least one of the surfaces presents said surface layer.
Point 2. The expander (4) according to point 1, wherein the material of the blades (10) or shrouded blades (10') and the stationary shroud (25) comprises at least 80 at.% aluminum, and the blade (10) or shrouded blade (10') and at least the first surface (31) of the stationary shroud (30) presents a surface layer (20) having a thickness (d) of from 1 to 1000 µm and an average Vickers hardness of 400 HV or more.
Point 3. The expander (4) according to point 1 or 2, wherein the substantially radial gap (r) between the surface of the radially outermost tip of the blades (10) or the shrouded blades (10') and the first surface of the stationary shroud (25) in the pre-operating condition is 0.05-0.5 mm, 0.05-0.4 mm, 0.05-0.3 mm, 0.05-0.2 mm, 0.05-0.15mm, 0.1-0.5 mm, 0.1-0.4 mm, 0.1-0.3 mm, 0.1-0.2 mm, 0.1-0.15mm, 0.2-0.5 mm, 0.2-0.4 mm, 0.2-0.3 mm, 0.3-0.5 mm or 0.30-0.4 mm.
Point 4. The expander (4) according to point 1 or 3, wherein the stationary shroud (25) is made of steel, steel alloy, titanium or titanium alloy.
Point 5. The expander (4) according to any one of points 1 to 4, wherein the material comprises 80-100 at.% aluminum, 85-100 at.% aluminum, 90-100 at.% aluminum, 95-100 at.% aluminum, 80-95 at.% aluminum, 80-90 at.% aluminum or 80-85 at.% aluminum.
Point 6. The expander (4) according to any one of points 1 to 5, wherein the material further comprises one or more aluminum alloying elements selected from a group comprising copper, magnesium, silicon, zinc, iron, manganese, titanium and chromium.
Point 7. The expander (4) according to any one of points 1 to 6, wherein the surface layer (20) has a thickness (d) of from 10 to 700 µm, from 25 to 500 µm, from 30 to 200 µm, from 20 to 100 µm, from 50 to 150 µm or from 40 to 80 µm.
Points 8. The expander (4) according to any one of points 1 to 7, wherein the surface layer (20) has an average Vickers hardness of 400-3000 HV, 600-2500 HV, 800-2000 HV, 1000-1800 HV,1200-1500 HV or 600-1600 HV.
Point 9. The expander (4) according to any one of points 1 to 9, wherein the surface layer (20) has a surface roughness k of 1/100 to 1/5, 1/100 to 1/10, 1/100 to 1/25, 1/100 to 1/50, 1/100 to 1/75, 1/75 to 1/5, 1/50 to 1/5, 1/25 to 1/5, or 1/10 to 1/5 of the surface layer (20) thickness (d).
Point 10. The expander (4) according to any one of points 1 to 9, wherein the blade (10) and/or the shrouded blade (10') is a solid aluminum or aluminum alloy component with the surface layer (20) formed thereon.
Point 11. The expander (4) according to any one of points 1 to 10, wherein the surface layer (20) comprises Al₂O₃.
Point 12. The expander (4) according to any one of points 1 to 10, wherein the surface layer (20) comprises SiO₂.
Point 13. The expander (4) according to any one of points 1 to 12, wherein a trailing edge (11) of the blade (10) has a radius (R) which is 0.05 to 0.3 mm, 0.1 to 0.3 mm, 0.15 to 0.3 mm 0.20 to 0.3 mm, 0.25 to 0.3 mm, 0.05 to 0.25 mm, 0.05 to 0.2 mm, 0.05 to 0.15 mm or 0.05 to 0.1 mm.
Point 14. Use of an expander (4) according to any of points 1 to 13 in an Organic Rankine Cycle system or a Kalina Cycle system.
Point 15. An Organic Rankine Cycle (1) system comprising:
   - an organic working fluid (2);
   - a heating and evaporating arrangement (3) for heating and evaporating the working fluid (2); and
   - an expander (4) according to any of points 1 to 13 arranged to convert energy in the evaporated working fluid from the heating and evaporating arrangement (3) into rotational energy.
Point 16. Method of producing an Organic Rankine Cycle system (1) comprising the steps of:
   - providing an organic working fluid (2);
   - providing a heating and evaporating arrangement (3) for heating and evaporating the working fluid (2);
   - providing an expander (4) according to any one of points 1 to 13 for conversion of energy in the evaporated working fluid (2) from the heating and evaporating arrangement (3) into rotational energy, and
   - providing an energy converter (5) connected to the rotor of the expander (4) for converting rotational energy of the rotor to another energy form.

## Claims

1. An expander (4) for use at a maximum internal operating temperature of less than or about 180°C, the expander comprising:
- a housing with a cylindrical inner surface;
- a stationary shroud (25) arranged along an inner circumference of the inner surface of the housing and with a generally radially inwardly directed first surface (31) exposed to the interior of the housing;
- a rotor (30) mounted in said housing and being rotatable around a longitudinal central axis of said housing;
- a plurality of blades (10) or shrouded blades (10') arranged circumferentially about said rotor (30) and extending substantially radially from said rotor towards the first surface of the stationary shroud (25), wherein the blades (10) or the shrouded blades (10') are arranged such that when the expander (4) is in a pre-operating condition a substantially radial gap (r) is formed between a surface of a radially outermost tip of the blades (10) or the shrouded blades (10') and the first surface (31) of the stationary shroud (25);
wherein the material of the blades (10), or shrouded blades (10'), and alternatively also the stationary shroud (25) comprises at least 80 at.% aluminum, and the blades (10) or shrouded blades (10') and at least the first surface (31) of a stationary shroud (25) if of at least 80 at.% aluminum presents a surface layer (20) having a thickness (d) of from 1 to 1000 µm and an average Vickers hardness of 400 HV or more, such that the gap (r) is defined between two surfaces wherein at least one of the surfaces presents said surface layer, and
wherein the stationary shroud (25) is made of steel, steel alloy, titanium or titanium alloy.

2. The expander (4) according to claim 1, wherein the substantially radial gap (r) between the surface of the radially outermost tip of the blades (10) or the shrouded blades (10') and the first surface of the stationary shroud (25) in the pre-operating condition is 0.05-0.5 mm, 0.05-0.4 mm, 0.05-0.3 mm, 0.05-0.2 mm, 0.05-0.15mm, 0.1-0.5 mm, 0.1-0.4 mm, 0.1-0.3 mm, 0.1-0.2 mm, 0.1-0.15mm, 0.2-0.5 mm, 0.2-0.4 mm, 0.2-0.3 mm, 0.3-0.5 mm or 0.30-0.4 mm.

3. The expander (4) according to claim 1 or 2, wherein the material comprises 80-100 at.% aluminum, 85-100 at.% aluminum, 90-100 at.% aluminum, 95-100 at.% aluminum, 80-95 at.% aluminum, 80-90 at.% aluminum or 80-85 at.% aluminum.

4. The expander (4) according to any one of claims 1 to 3, wherein the material further comprises one or more aluminum alloying elements selected from a group comprising copper, magnesium, silicon, zinc, iron, manganese, titanium and chromium.

5. The expander (4) according to any one of claims 1 to 4, wherein the surface layer (20) has a thickness (d) of from 10 to 700 µm, from 25 to 500 µm, from 30 to 200 µm, from 20 to 100 µm, from 50 to 150 µm or from 40 to 80 µm.

6. The expander (4) according to any one of claims 1 to 5, wherein the surface layer (20) has an average Vickers hardness of 400-3000 HV, 600-2500 HV, 800-2000 HV, 1000-1800 HV,1200-1500 HV or 600-1600 HV.

7. The expander (4) according to any one of claims 1 to 6, wherein the surface layer (20) has a surface roughness k of 1/100 to 1/5, 1/100 to 1/10, 1/100 to 1/25, 1/100 to 1/50, 1/100 to 1/75, 1/75 to 1/5, 1/50 to 1/5, 1/25 to 1/5, or 1/10 to 1/5 of the surface layer (20) thickness (d).

8. The expander (4) according to any one of claims 1 to 7, wherein the blade (10) and/or the shrouded blade (10') is a solid aluminum or aluminum alloy component with the surface layer (20) formed thereon.

9. The expander (4) according to any one of claims 1 to 8, wherein the surface layer (20) comprises Al₂O₃.

10. The expander (4) according to any one of claims 1 to 8, wherein the surface layer (20) comprises SiO₂.

11. The expander (4) according to any one of claims 1 to 10, wherein a trailing edge (11) of the blade (10) has a radius (R) which is 0.05 to 0.3 mm, 0.1 to 0.3 mm, 0.15 to 0.3 mm 0.20 to 0.3 mm, 0.25 to 0.3 mm, 0.05 to 0.25 mm, 0.05 to 0.2 mm, 0.05 to 0.15 mm or 0.05 to 0.1 mm.

12. Use of an expander (4) according to any of claims 1 to 11 in an Organic Rankine Cycle system or a Kalina Cycle system.

13. An Organic Rankine Cycle (1) system comprising:
- an organic working fluid (2);
- a heating and evaporating arrangement (3) for heating and evaporating the working fluid (2); and
- an expander (4) according to any of claims 1 to 11 arranged to convert energy in the evaporated working fluid from the heating and evaporating arrangement (3) into rotational energy.

14. Method of producing an Organic Rankine Cycle system (1) comprising the steps of:
- providing an organic working fluid (2);
- providing a heating and evaporating arrangement (3) for heating and evaporating the working fluid (2);
- providing an expander (4) according to any one of claims 1 to 11 for conversion of energy in the evaporated working fluid (2) from the heating and evaporating arrangement (3) into rotational energy, and
- providing an energy converter (5) connected to the rotor of the expander (4) for converting rotational energy of the rotor to another energy form.
